(19) Europäisches Patentamt
European Patent Office
Office européen des brevets

(11) **EP 4 030 578 A1**

(12) **EUROPEAN PATENT APPLICATION**

(43) Date of publication:
**20.07.2022 Bulletin 2022/29**

(21) Application number: **21382028.5**

(22) Date of filing: **18.01.2021**

(51) International Patent Classification (IPC):
***H02J 3/46*** *(2006.01)*

(52) Cooperative Patent Classification (CPC):
**H02J 3/46;** H02J 2203/20

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Universitat Politècnica De Catalunya 08034 Barcelona (ES)**

(72) Inventors:
• **PRIETO ARAUJO, Eduardo**
  **08330 Premià de Mar (ES)**
• **CHEAH MAÑÉ, Marc**
  **08014 Barcelona (ES)**
• **SONG, Jie**
  **08014 Barcelona (ES)**
• **GOMIS BELLMUNT, Oriol**
  **08006 Barcelona (ES)**

(74) Representative: **Juncosa Miró, Jaime et al Torner, Juncosa i Associats, S.L. C/Pau Claris, 108, 1r 1a 08009 Barcelona (ES)**

(54) **METHOD FOR OBTAINING VOLTAGE-INTENSITY CHARACTERISTICS OF A POWER SYSTEM WITH POWER ELECTRONIC CONVERTERS**

(57)     A computer implemented method to obtain the *U-I* characteristic of a power system which includes one or more power electronic converters, as well as to identify the operation points of a particular power system connected to an external system using a new equivalent representation of the power system based on its *U-I* characteristics including a Voltage Source Converter, VSC, connected to a point of connection, POC, of an electrical network, external to the power electronic system. The equivalent representation is obtained by sweeping several output impedances at a selected bus to map the relationship between voltages and currents of a specific point of a network, including specifically short-circuit calculations.

*Fig.3*

**EP 4 030 578 A1**

**Description**

Technical field

The present invention refers to a computer implemented method to obtain the *U-I* characteristic of a power system which includes one or more power electronic converters, as well as to identify the operation points of a particular power system connected to an external system using a new equivalent representation of the power system based on its *U-I* characteristics which is obtained by sweeping several output impedances at a selected bus to map the relationship between voltages and currents of a specific point of a network, including specifically short-circuit calculations.

State of the Art

THÉVENIN'S theorem was independently proposed by Hermann von Helmholtz [1] in 1853 and Leon Charles Thevenin [2] in 1883. Such theorem established that any electrical circuit composed of electrical sources and impedances could be modelled as an equivalent circuit containing a voltage source and a series impedance. Since then, power systems analysis has been based on this equivalent representation to solve AC and DC circuits in both normal and fault conditions. More specifically, in short-circuit calculation, the studied network is modelled as a Thevenin equivalent at the fault location. Such short-circuit calculations are typically used for correct protection and secure sizing of electrical installations.

The penetration of power-electronics-based sources and loads at different voltage levels is changing the understanding of power systems. Non-linear operation characteristics have been introduced in recent times to the grid due to the integration of power converters with different control strategies. Also, since power converters cannot be significantly overloaded, the converter current is limited for protection, which modifies the converter operation characteristics. As a result, multiple equilibrium points might be obtained where different converters are saturated or unsaturated. Thus, when the penetration of power electronics-based elements (such as PV, wind, FACTS and HVDC) is significant in a power system, the classical Thevenin equivalent is not valid anymore. This is especially critical for systems composed of multiple converters.

Short-circuit analysis in power systems dominated by power electronics has been addressed in many pieces of the prior art. A comprehensive study on short-circuit characteristic of Voltage Source Converter (VSC) based DC network is presented in [4] considering different distributed generation sources. Also, fault responses of power converters integrated wind and PV generation are analysed in [5], [6].

These scientific papers disclose short-circuit analysis based on the results obtained from either dynamic simulations or field tests. However, a steady-state representation appears more suitable for short-circuit calculations.

Steady-state modelling of power systems with power electronics have been also reported in the field. A sequential AC/DC power flow calculation is revealed in [7], where the control modes and operation limits of VSCs are considered. Such VSC operation limits are also included in the optimum power flow algorithm presented in [8]-[10]. However, these prior art documents do not consider multiple equilibrium points related to different current saturation states of power converters and therefore might be limited for some technical implementations.

CN108832606A1 discloses an active power distribution network protection scheme considering area measurement capability comprising the following steps: S1, establishing an inverse distributed power source fault characteristic analysis model in a constant power control mode, and keeping the voltage of the direct current side of the inverter constant after the model is simplified; S2, analysing the fault characteristics of the distributed power supply under the fault condition and the influence of the fault characteristics on the current protection of the power distribution network, wherein the current fault characteristics of the inverter type distributed power supply depend on the control strategy of an inverter; S3, aiming at areas with excellent power distribution network measurement capability, constructing an active power distribution network protection system framework by adopting a structure form of combining a centralized type and a layered type, and S4, aiming at the area with the deficient measurement capability of the power distribution network, utilizing an active power distribution network reclosing scheme with the coordination of distributed power supply grid connection and power distribution network protection action time sequence.

EP0893002A1 relates to a method for control of a converter installation and to a device for carrying out the method which determines short-circuit power (SCC1, SCC2) in an electric power network (NI, N2) for alternating current, which at a connection point (JI, J2) is connected to a converter installation (PL) for transmission of high-voltage direct current wherein a converter (SRI, SR2) comprised in the converter installation is connected to the power network, said converter operating with a control angle ($\alpha$1, $\alpha$2) in dependence on an ordered control angle (AOI, A02), ordered by control equipment (CE1, CE2), the method involving calculations of a first and second power values of reactive power consumed by the converter at different calculation times and during a measurement interval between a first and second measurement times a first power difference is formed in dependence on the difference of the first and second power values, a first voltage difference is formed in dependence on the difference of the first and second voltage values and a measured value of the short-circuit power of the power network is formed in dependence on the first power difference and the first voltage difference.

The present patent application proposes a method of obtaining voltage-intensity characteristics of a system with penetration of power electronics in particular including one or more power electronic converters. To implement the method a novel steady-state equivalent representation to characterize such power systems is established. Such equivalent model is suitable for both normal-operation and short-circuit analyses.

References

[1] H. Helmholtz, "Ueber einige Gesetze der Vertheilung elektrischer Ströme in körperlichen Leitern mit Anwendung auf die thierischelektrischen Versuche," Annalen der Physik und Chemie, vol. 165, pp. 211-233, jan 1853.

[2] L. C. Thevenin, "Extension de la loi d'Ohm aux circuits électromoteurs complexes," Annales Télégraphiques, vol. 10, pp. 222-224, 1883.

[4] Z. Shuai, D. He, Z. Xiong, Z. Lei, and Z. John Shen, "Comparative Study of Short-Circuit Fault Characteristics for VSC-Based DC Distribution Networks with Different Distributed Generators," IEEE Journal of Emerging and Selected Topics in Power Electronics, vol. 7, no. 1, pp. 528-540, 2019.

[5] Z. H. Rather et al., "Dynamic Reactive Power Compensation of Large-Scale Wind Integrated Power System," IEEE Trans. on Power Systems, vol. 30, pp. 2516-2526, sep. 2015.

[6] Chunyi Wang et al., "Short-circuit field tests of Shandong Rongcheng wind farms and measured data analysis," in 2015 12th Int. Conf. on Fuzzy Systems and Knowledge Discovery (FSKD), pp. 2670-2675, IEEE, aug. 2015.

[7] J. Beerten et al., "Generalized Steady-State VSC MTDC Model for Sequential AC/DC Power Flow Algorithms," IEEE Trans. on Power Systems, vol. 27, pp. 821-829, may. 2012.

[8] J. Cao et al., "Minimization of transmission loss in meshed AC/DC grids with VSC-MTDC networks," IEEE Trans. on Power Systems, vol. 28, no. 3, pp. 3047-3055, 2013.

[9] M. Aragüés-Penalba et al., "Optimal power flow tool for mixed high-voltage alternating current and high-voltage direct current systems for grid integration of large wind power plants," IET Renewable Power Generation, vol. 9, pp. 876-881, nov. 2015.

[10] H. Ergun et al., "Optimal Power Flow for AC-DC Grids: Formulation, Convex Relaxation, Linear Approximation, and Implementation," IEEE trans. on Power Systems, vol. 34, pp. 2980-2990, jul. 2019.

Brief description of the invention

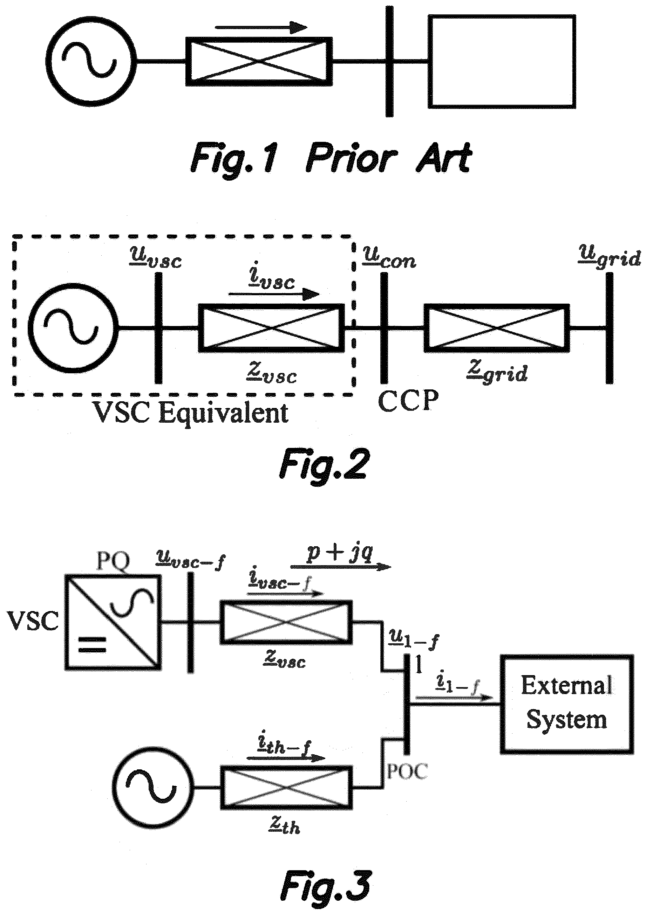

The present invention relates to a method for obtaining voltage-intensity characteristics of a power system with power electronic converters using an equivalent model, including a Voltage Source Converter, VSC, connected to a point of connection, POC, of an electrical network, external to the power electronic system. The VSC is represented with a voltage source, $\underline{u}_{VSC}$, in series connection with a phase reactor $\underline{z}_{VSC}$, as shown in Fig. 2.

The proposed computer implemented method comprises following steps:

(A) loading or inputting by a processor unit a system of equations $SE_f$ defining the VSC operation of the power electronic system, according to a selected combination of saturation states in which the involved power converters of the power electronic system can operate, including a matrix of intensities, admittances and voltages representative of the system and a current injection constraint H for each selected combination;

(B) calculating by a processor unit by means of running an iterative algorithm (Algorithm 2), from a given equivalent model of the power system, a solution of the system of equations $SE_f$ for a plurality of test impedances, including for each impedance module and angle;

(C) applying, by a processor unit, to each calculation of step (B) at least one of:

- a Single-State-Single-Solution, SS,

- a Multiple-States-Single-Solution, MS,

- a Multiple-States-Multiple-Solutions, MM,

wherein the iterative algorithm performs the calculation of the system of equations $SE_f$ for each test impedance delivering one or more solutions of the system of equations $SE_f$ at least for some of the test impedances, each solution including a set of values of current and voltage defining a U-I characteristics, or a I-U characteristics, of the power system, and wherein said equivalent model includes the solutions of said system of equations, including U-I characteristics or I-U characteristics associated to a current source or a voltage source.

According to the proposed method said set of values of current and voltage for each of the delivered solution is a set of three values, wherein a first part of the U-I characteristics or I-U characteristics is a real number, and a second part comprises a real part and an imaginary part.

The method further comprises a step (D) of representing by a processor unit for each solution of the system of equations $SE_f$ in a three-dimensional space, a 3D surface $C_{eq}$, defined by the set of three values for each test impedance.

All the steps can be implemented using a single processor unit or several processor units each dedicated to one or more stages.

In addition, the VSC operation of the power system includes VSC operation control modes PQ and PV, which are divided in three current saturation states: unsaturated state, USS, partially saturated state, PSS, and fully saturated state, FSS, and VSC operation control mode GF, which is divided in two current saturation states, USS and FSS.

According to an embodiment of this patent application the power system includes at least two power converters, and the step (D) of representing provides a 3D surface of the VSC operation of the power system for two converters states combination: USS-USS, USS-PSS, USS-FSS, PSS-USS, PSS-PSS, PSS-FSS, and FSS-USS, FSS-PSS, FSS-FSS.

In the proposed method the U-I characteristics or I-U characteristics of the power system are operated in conjunction with an external system by finding a graphical intersection between the at least one 3D surface $C_{eq}$ that describes the power system and a function $G_{ex}$ describing the external system which includes power elements that operates in different current saturation states that are calculated through a combination of saturation states.

The power system to which this method is applied may also include at least one voltage source with a series impedance, or at least one current source with a parallel impedance connected to the point of connection, POC, of an electrical network external to the power system.

The iterative algorithm of step (B) has as inputs: an admittance matrix $Y$, some constraints $H$, options regarding the number of possible solutions and values of impedances: magnitudes $z_{out}$ and angles $\theta_z$ and provides as a result a 3D surface $C_{eq}$ representative of the power system.

The iterative algorithm of step (B) uses an auxiliary algorithm (Algorithm 1) operated by a processor unit that calculates solutions (voltage, current) of the power system for a specific option about the number of solutions.

For the last, the processor unit runs a third algorithm that receives as inputs the $C_{eq}$ (set of solutions $S$), $G_{ex}$ representing the external system and additional constraints between variables $a(x)$. This third algorithm calculates operation point of the power system represented with equivalent U-I characteristics when connected to an external system at a specific bus. The calculation is performed by the processor unit as geometric intersection between the representation of the power system and the external system.

Brief description of the drawings

The foregoing and other advantages and features will be more fully understood from the following detailed description of an embodiment with reference to the accompanying drawings, to be taken in an illustrative and non-limitative manner, in which:

Fig. 1 is a schematic illustration of a Thevenin equivalent, according to the state of the art.
Fig. 2 shows a diagram of an equivalent model of a power system with power electronic converters, used to implement the method of this invention.
Fig. 3 is a diagram representing a power system with an AC grid Thevenin equivalent and a VSC in PQ mode.
Fig. 4 shows the structure of a typical power system including VSCs, which represent a system to be analysed that is connected to an external system at Point of Connection (POC).
Fig. 5 is an equivalent representation with *U-I* characteristics, where on the left is shown an equivalent with a current source and on the right an equivalent with a voltage source.
Fig. 6 is a representation of the *U-I* characteristics of an example of a power system with indication of the identified

operation points coordinates ($u_{outx}$,$u_{outy}$,$i_{out}$) and its intersection with an external system modelled as a short-circuit impedance.

Fig. 7A illustrates the U-I characteristic of a conventional AC grid Thevenin equivalent.

Fig. 7B is an illustration showing a scheme of a power system operated in grid forming mode and a surface showing the *U-I* characteristics.

Fig. 7C and 7D illustrates the U-I characteristic of an AC grid with a VSC in PQ mode.

Fig. 7E shows the U-I characteristic of an AC grid with a VSC in PV mode.

Fig. 7F shows an AC grid with two VSCs both operating in PQ mode.

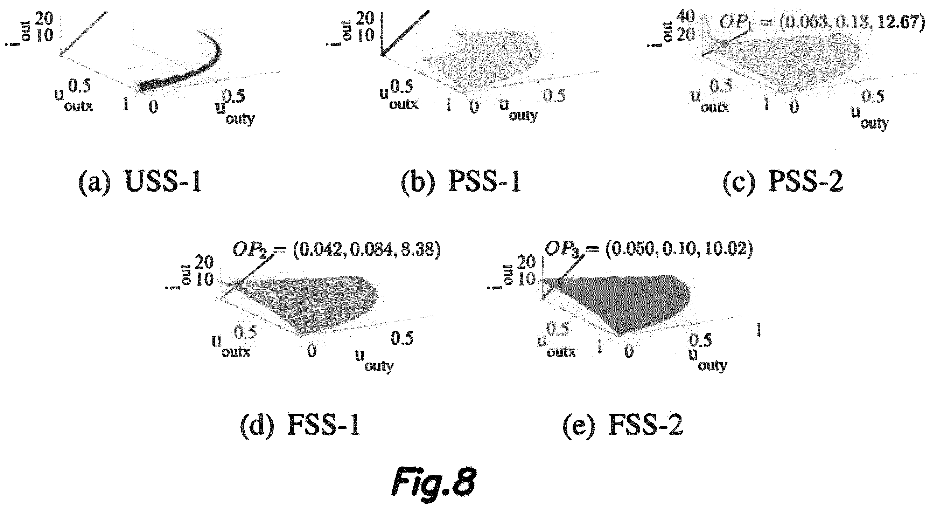

Fig. 8 illustrates examples of five subsets of U-I characteristic (using the representation shown in Fig. 6) employed for short-circuit calculations.

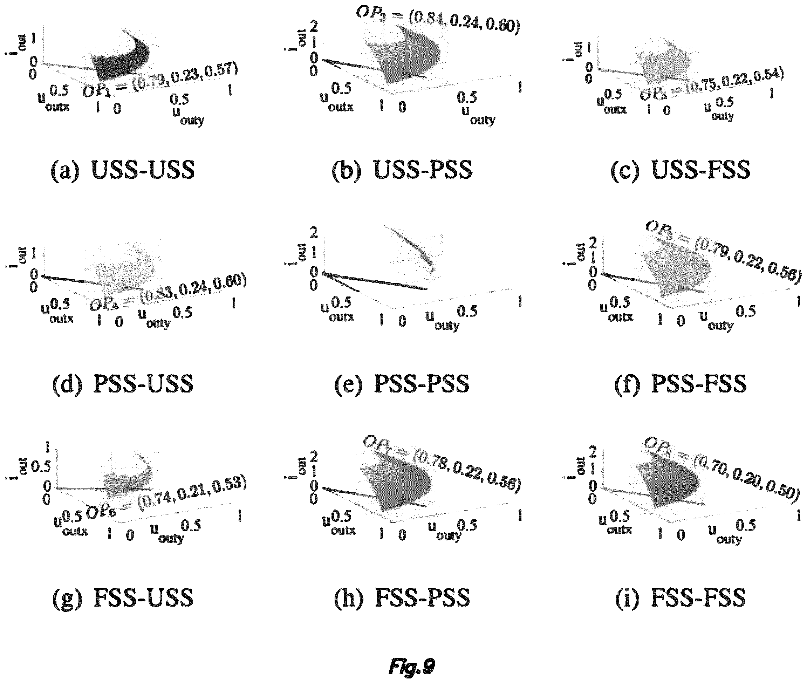

Fig. 9 is similar to Fig. 8 but indicating the U-I characteristics and an external system function.

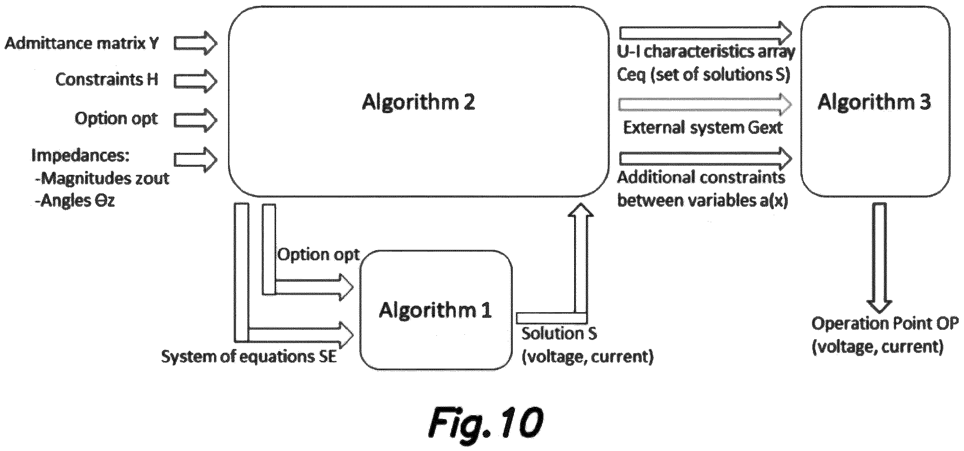

Fig. 10 is a block diagram illustrating the functional interrelationship between the three algorithms used to implement the computer implemented method of this invention.

## Detailed description of several embodiments

As previously explained the method of the present invention proposes a steady-state modelling for power systems with penetration of power electronics and this steady-state modelling is used to find operation point solutions and define an equivalent U-I characteristics of a given power system as explained in the following sections.

### I. VSC Equivalent Model

The VSC equivalent model of power systems with penetration of power electronics is represented with a voltage source, $\underline{u}_{vsc}$, in series connection with a phase reactor, $\underline{z}_{vsc}$, as shown in Fig. 2. Power exchange with the AC grid is regulated by the VSC at the Converter Connection Point (CCP), which can be expressed as: $p + jq = \underline{u}_{con}\underline{i}_{vsc}^{*}$ where p and q are the active and reactive power injection from the VSC, $\underline{u}_{con}$ is the CCP voltage and $\underline{i}_{vsc}$ is the VSC current injection. Then, the converter voltage can be obtained as: $\underline{u}_{vsc} = \underline{u}_{con} + \underline{i}_{vsc}\underline{z}_{vsc}$

Additional characterizing equations will be included to define the VSC operation combining the control mode and potential current saturation states. VSC operation in grid-following mode, in particular PQ and PV controls, and grid-forming (GF) control are considered here. The VSC equivalent model with PQ and PV controls can be divided into three current saturation states while the grid-forming VSC equivalent model is divided into two current saturation states:

- Unsaturated state (USS): the total current from VSC in not saturated. The VSC operation can be expressed as:

$$\begin{cases} p = p_{ref}; q = q_{ref} & \text{if PQ mode} \\ p = p_{ref}; u_{con} = u_{ref} & \text{if PV mode} \\ u_{con} = u_{ref}; \theta_{u_{con}} = \theta_{ref} & \text{if GF mode} \end{cases} \qquad (1)$$

where $p_{ref}$ and $q_{ref}$ are active and reactive power references, $u_{ref}$ and $\theta_{ref}$ are reference value of voltage magnitude and angle at the CCP.

- Partially saturated state (PSS): the current limitation of VSC is reached and the references defined in (1) cannot be achieved anymore. The VSC in GF mode does not regulate the power directly, the PSS does not apply. Usually, active power component is reduced to prioritize the reactive power component in PQ and PV modes [11]:

$$\begin{cases} i_{vsc} = i_{vsc}^{\max}; q = q_{ref} & \text{if PQ mode} \\ i_{vsc} = i_{vsc}^{\max}; u_{con} = u_{ref} & \text{if PV mode} \end{cases} \qquad (2)$$

where $i_{vsc}^{\max}$ is the VSC nominal current. However, active power can be prioritized with similar formulations.

- Fully saturated state (FSS): Active power is set to 0 in order to prioritize reactive power for PQ and PV modes

Then, VSC in PQ and PV mode follows the same constraints. The VSC in GF mode maintain only the CCP voltage angle at the reference value as the total current is saturated. Then, the VSC operation is expressed as:

$$\begin{cases} i_{vsc} = i_{vsc}^{\max}; \; p = 0 & \text{if PQ/PV mode} \\ i_{vsc} = i_{vsc}^{\max}; \; \theta_{u_{con}} = \theta_{ref} & \text{if GF mode} \end{cases} \tag{3}$$

II. Formulation of Power Systems with penetration of power electronics

Power electronics elements can operate in different current saturation states, which results in different system of equations to define the studied power system. The number of combinations in a power system with $N_{PE}$ power electronics elements can be expressed as: $F = \prod_{n=1}^{N_{PE}} x_n$ , where $x_n$ is the number of current saturation states of the element $n$. The system of equations, $SE_f$, which defines a power system for each combination $f \in [1, F]$ can be expressed as follows:

$$SE_f := \begin{cases} \begin{bmatrix} \begin{bmatrix} \underline{i}_{1-f} \\ \vdots \\ \underline{i}_{A-f} \end{bmatrix} = \underbrace{\begin{bmatrix} \underline{y}_{11} & \cdots & \underline{y}_{1A} \\ \vdots & \ddots & \vdots \\ \underline{y}_{A1} & \cdots & \underline{y}_{AA} \end{bmatrix}}_{Y} \begin{bmatrix} \underline{u}_{1-f} \\ \vdots \\ \underline{u}_{A-f} \end{bmatrix} \end{bmatrix} \\ \underline{i}_{a-f} = \sum_{m=1}^{M_a} \underline{i}_{a,m-f} \; \forall a \in [1, A] \\ H_f = \begin{bmatrix} h_{1-f} & \cdots & h_{m-f} & \cdots & h_{M-f} \end{bmatrix}^T \end{cases} \tag{4}$$

where A is the number of total buses of the studied system, $\underline{u}_{a-f}$ is the voltage at bus $a$ for $a \in [1, A]$, $\underline{i}_{a-f}$ is the current injection at bus $a$, $M_a$ is the number of elements connected to bus $a$, $\underline{i}_{a,m-f}$ is the current injection from element $m$ at bus $a$ for $m \in [1,M_a]$ and the number of total elements can be obtained as $M = \sum_{a=1}^{A} M_a$ . The impedance from power electronics and non-power electronics elements connected to each bus are excluded from the $Y$ matrix in accordance with the current injection defined in constraints $H_f$. The set of equations $h_{m-f}$ defines current injection from element $m$ operating in combination $f$ for $m \in [1,M]$. Current injection from a nonpower electronics element can be expressed as follows in the most common cases:

$$(5) \begin{cases} h_{m-f} := \underline{i}_{a,m} = \underline{i}_{ref,m} & \text{if current source} \\ h_{m-f} := \underline{i}_{a,m} = \dfrac{\underline{u}_{th,m} - \underline{u}_a}{\underline{z}_{th,m}} & \text{if Thevenin eq.} \\ h_{m-f} := \underline{i}_{a,m} = \left( \dfrac{p_{ref,m} + j q_{ref,m}}{\underline{u}_a} \right)^* & \text{if PQ node} \\ h_{m-f} := \begin{bmatrix} u_a = u_{ref} \\ \mathrm{Re}\left( \underline{u}_a \underline{i}_{a,m}^* \right) = p_{ref,m} \end{bmatrix} & \text{if PV node} \end{cases}$$

where $\underline{i}_{ref,m}$ is the reference of a current source, $\underline{u}_{th,m}$ and $\underline{z}_{th,m}$ are the Thevenin equivalent voltage and impedance respectively, $p_{ref,m}$ and $q_{ref,m}$ are active and reactive power reference, and $u_{ref}$ is the voltage reference for a PV node. Current injection from a power electronics element is defined based on the equivalent model. In case of VSCs, the current injection constraints are defined following the equivalent model presented in Section II-A.

The Example System represents the studied system with an AC grid Thevenin equivalent and a VSC in PQ mode as shown in Fig. 2.

Three combinations will be included, respectively corresponding to the three VSC current saturation states (USS, PSS and FSS), in the system of equations formulating the studied system. The system of equations from the studied system corresponding to combination $f \in [1,3]$ is expressed as:

$$(6) \quad SE_f := \begin{cases} \underline{i}_{1-f} = \underline{y}_{11}\underline{u}_{1-f} \\ \underline{i}_{1-f} = \underline{i}_{th-f} + \underline{i}_{vsc-f} \\ H_f = \begin{bmatrix} h_{1-f} & h_{2-f} \end{bmatrix}^T \end{cases}$$

where the admittance value at bus 1 is $\underline{y}_{11} = 0$. The current injection at bus 1 is composed of the Thevenin equivalent current $\underline{i}_{th-f}$, which is defined by $h_{1-f}$, and the VSC current injection $\underline{i}_{vsc-f}$, which is defined by $h_{2-f}$. The Thevenin equivalent current is the same for the three combinations, while the VSC current injection will be modified following the VSC equivalent model in PQ mode presented in Section II-A. Then, the current injection constraint, $H_f$, is defined for each combination $f$ as:

$$H_1 = \begin{bmatrix} h_{1-1} := \underline{i}_{th-1} = \left(\underline{u}_{th} - \underline{u}_{1-1}\right)/\underline{z}_{th} \\ h_{2-1} := \begin{bmatrix} \text{Re}\left(\underline{u}_{1-1}\underline{i}_{vsc-1}^*\right) = p_{ref} \\ \text{Imag}\left(\underline{u}_{1-1}\underline{i}_{vsc-1}^*\right) = q_{ref} \end{bmatrix} \end{bmatrix} \text{if USS}$$

$$(8) \quad H_2 = \begin{bmatrix} h_{1-2} := \underline{i}_{th-2} = \left(\underline{u}_{th} - \underline{u}_{1-2}\right)/\underline{z}_{th} \\ h_{2-2} := \begin{bmatrix} i_{vsc-2} = i_{vsc}^{max} \\ \text{Imag}\left(\underline{u}_{1-1}\underline{i}_{vsc-1}^*\right) = q_{ref} \end{bmatrix} \end{bmatrix} \text{if PSS}$$

$$(9) \quad H_3 = \begin{bmatrix} h_{1-3} := \underline{i}_{th-3} = \left(\underline{u}_{th} - \underline{u}_{1-3}\right)/\underline{z}_{th} \\ h_{2-3} := \begin{bmatrix} \text{Re}\left(\underline{u}_{1-3}\underline{i}_{vsc-3}^*\right) = 0 \\ i_{vsc-3} = i_{vsc}^{max} \end{bmatrix} \end{bmatrix} \text{if FSS}$$

III. Operation limits of VSC

The operation range of VSC sets limits to the obtained equilibrium points found using the suggested methodology

Only the solutions that satisfy the operation limits of all VSCs are validated as equilibrium points of the power system. A function *VOL* is used to identify if an obtained solution satisfies VSCs operation limits, which is expressed as:

$$VOL(sol) = (i_{vsc} \le i_{vsc}^{max}) \, \& \, (u_{vsc} \le u_{vsc}^{max}) \, \& \, (p_{min} \le p_{vsc}) \, \& \, (p_{vsc} \le p_{max}) \, \& \, (q_{min} \le q_{vsc}) \, \& \, (q_{vsc} \le q_{max}) \quad (10)$$

where *sol* is the solution to be validated, $u_{vsc}^{max}$ is the upper limit of converter voltage, $p_{min}$ and $p_{max}$ are the lower and upper bonds of active power, $q_{min}$ and $q_{max}$ are the lower and upper bonds of reactive power. The function *VOL* returns true for the solution that satisfies the VSCs operation limits. The operation limits of the VSC in the studied system of the Example System set the same function as expressed in (10).

Equilibrium points may exist in a given power system to be analysed for each combination of power electronics current saturation states. Also, multiple solutions may be obtained from each system of equations, $SE_f$ [12]. In this direction, three different options regarding the number of solutions obtained from SE are considered here:

- Single-State-Single-Solution (SS): this option identifies only one equilibrium point of the studied power system. Also, the equilibrium point is obtained giving priority to the VSC operation in USS over PSS or FSS. This option is recommended for analysis of power systems containing only one converter.
- Multiple-States-Single-Solution (MS): this option returns one equilibrium point for each combination $f \in [1, F]$. This option is recommended for analysis of power systems with multiple converters.
- Multiple-States-Multiple-Solutions (MM): this option identifies all equilibrium points for each combination $f \in [1, F]$. Besides, systems of equations corresponding to all possible combinations are solved, respectively. This option is recommended for applications requiring the identification of all equilibrium points.

The methodology to solve systems of equations in different options is defined as the solution function and is shown in Algorithm 1 which is detailed below. The input information includes a set of systems of equations, *SE,* and the selected option, *opt.*

The SS and MS options identify only one equilibrium point for a system of equations $SE_f$. In these two cases, systems of equations are solved using an iterative method, e.g., Newton-Raphson method. In the SS option, the solution function returns only one solution, while in MS option, the number of returned solutions is equal to the number of combinations, *F,* of the studied system. In case that the equilibrium point does not exist for a combination *f,* the corresponding solution $S(f)$, will be marked as *no solution* and is saved as a zero vector.

In MM option, the *solution* function obtains all possible equilibrium points. The number of returned solutions in

$$N_s = \sum_{f=1}^{F} N_{s,f}$$

MM option can be expressed as: where $N_{s,f}$ is the number of solutions obtained from $SE_f$. In this approach the NPHC method is employed to obtain all solutions of a system of equations $SE_f$ [13]. The NPHC method is implemented through the mathematical software, *PHCpack,* to solve the power systems equations and obtain all solutions as disclosed in [14]. The *PHCpack* requests real-number equations defining the studied power system as input and returns all solutions. The unfeasible complex-number solutions will be marked as *no solution* and is saved as a zero vector. The obtained solutions in any of the options will be validated as an equilibrium point using the *VOL* function defined in (10). In case that the operation limits of VSCs are not satisfied, the solution will be also marked as no solution. However, the identification of all equilibrium points with MM option usually requires higher computation compared to SS and MS options. Thus, this option might be limited for studies with a large-scale grid.

IV. Definition of U-I Characteristic

```
Algorithm 1: solution of power system equations
    input  : systems of equations SE, option opt.
    output: Equilibrium point solutions set S
    begin
        switch opt do
            case SS or MS do
                for f ← 1 to F do
                    sol = solve(SE_f);
                    if VOL(sol) then S(f) = sol;
                        if SS then break; endif;
                    else S(f) = no solution; endif;
                end
            end
            case MM do
                a = 1;
                for f ← 1 to F do
                    sol = NPHCsolve(SE_f);
                    N_{s,f} = size(sol);
                    for n_{s,f} ← 1 to N_{s,f} do
                        if VOL(sol(n_{s,f})) then
                            S(a) = sol(n_{s,f});
                        else S(a) = no solution; endif;
                        a = a + 1;
                    end
                end
            end
        end
        return S;
    end
```

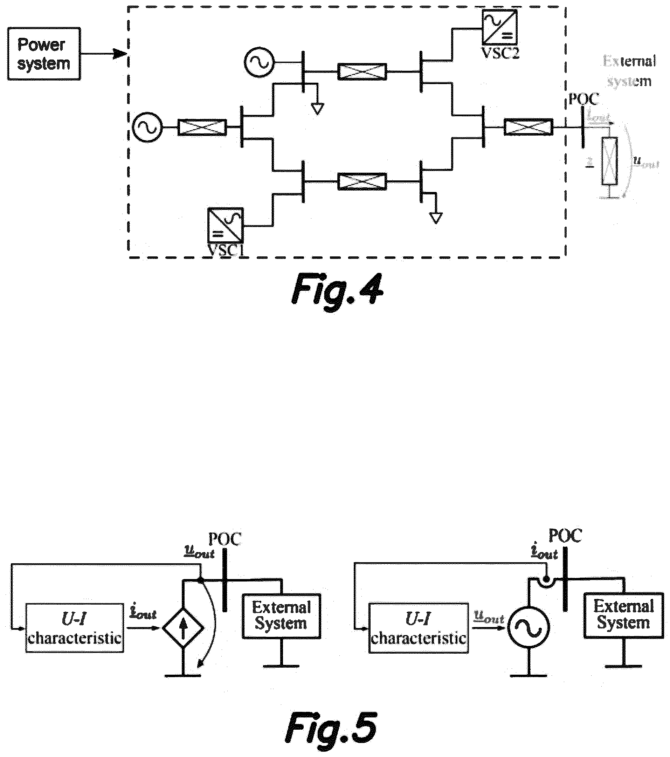

This patent application proposes a power system characterization based on the voltage-current (U-I) relationship in a desired bus of the network. The U-I characteristic can be obtained to represent a power system in steady-state throughout a certain operation range. Fig. 3 shows the structure of a typical power system including VSCs, which represents a studied system that is connected to an external system at Point of Connection (POC). In this example, the external system has been defined as an impedance $\underline{z}$. The studied system can be equally represented as a current source or a voltage source for its connection to any external system in steady-state analysis. Fig. 4(a) shows an equivalent.

V. Methodology to Obtain U-I Characteristic

The equivalent U-I characteristic of the studied system can be obtained by sweeping various output impedances, $\underline{z}_{out}$, at the POC. Each output impedance is inserted in the admittance matrix at the POC (corresponding to a generic bus C in the admittance matrix), such that the admittance $\underline{y}_{cc}$ in (4) is updated as: $\underline{y}_{CC}^{new} = \underline{y}_{CC} + 1/\underline{z}_{out}$. This output impedance is defined as $\underline{z}_{out} = z_{out}[\cos(\theta_z) + j\sin(\theta_z)]$, where $z_{out}$ is the impedance magnitude and $\theta_z$ is the impedance angle. Then, the complete operation range of the studied system can be scanned by testing several impedances with different magnitudes and angles. The angular reference is aligned to the phase angle of output current, *i.e.*, $\underline{i}_{out} = i_{out} < 0°$, for the convenience to develop equivalent representation. Therefore, the phase angle of output voltage is equal to the output impedance angle:

$$\underline{u}_{out} = z_{out} \angle \theta_z i_{out} \angle 0^o = \underbrace{u_{out}\cos\theta_z}_{u_{outx}} + j\underbrace{u_{out}\sin\theta_z}_{u_{outy}} \quad (11)$$

Then, the *U-I* characteristic is expressed as a function of $i_{out}$ and $\underline{u}_{out}$ such that:

$$i_{out} = F(u_{outx}, u_{outy}).$$

The methodology to obtain the *U-I* characteristic is summarized in Algorithm 2. Output impedance, $z_{out}$, is tested with *M* different magnitudes and *N* different angles. Each $\underline{z}_{out}$ tested is inserted in the *Y* matrix. Then, a set of systems of equations, *SE,* considering the inserted $z_{out}$ is defined and solved using the *solution* function presented in Algorithm 1 with the given option, *opt.* This solution function returns a matrix *S* containing $N_s$ solutions as vectors ($u_{outx}, u_{outy}, i_{out}$). Each solution $S(n_s)$, for $n_s \in [1,N_s]$ ,is saved into the *U-I* characteristic array $C_{eq}$. As a result, the output of this algorithm provides the array $C_{eq}$ with $M \times N \times N_s$ elements that define the equivalent *U-I* characteristic of the studied system. Each element in contains a solution of ($u_{outx}, u_{outy}, i_{out}$).

A subset from the array, $C_{eq}(all,all,n_s)$ for $n_s \in [1,N_s]$, represents a solution matrix of the *U-I* characteristic. While the number of solution matrices $N_s$, is depending on the selected option, *opt,* as explained previously.

---

**Algorithm 2:** Obtaining *U-I* characteristic

**input** : Admittance matrix **Y**, constraints *H*, option *opt*, output impedance magnitudes $z_{out}(M)$ and angles $\theta_z(N)$

**output:** *U-I* characteristic array $C_{eq}$

**begin**

  **for** $m \leftarrow 1$ **to** $M$ **do**

    **for** $n \leftarrow 1$ **to** $N$ **do**

      $z_{out} = z_{out-m}\angle\theta_{z-n}$; $y_{CC}^{new} = y_{CC} + 1/z_{out}$;

      $SE = defineEq(Y, H)$;

      $S = solution(SE, opt)$; $N_s = size(S)$;

      **for** $n_S \leftarrow 1$ **to** $N_s$ **do**

        $C_{eq}(m, n, n_s) = S(n_s)$;

      **end**

    **end**

  **end**

  **return** $C_{eq}$

**end**

---

VI. Analysis of U-I characteristic

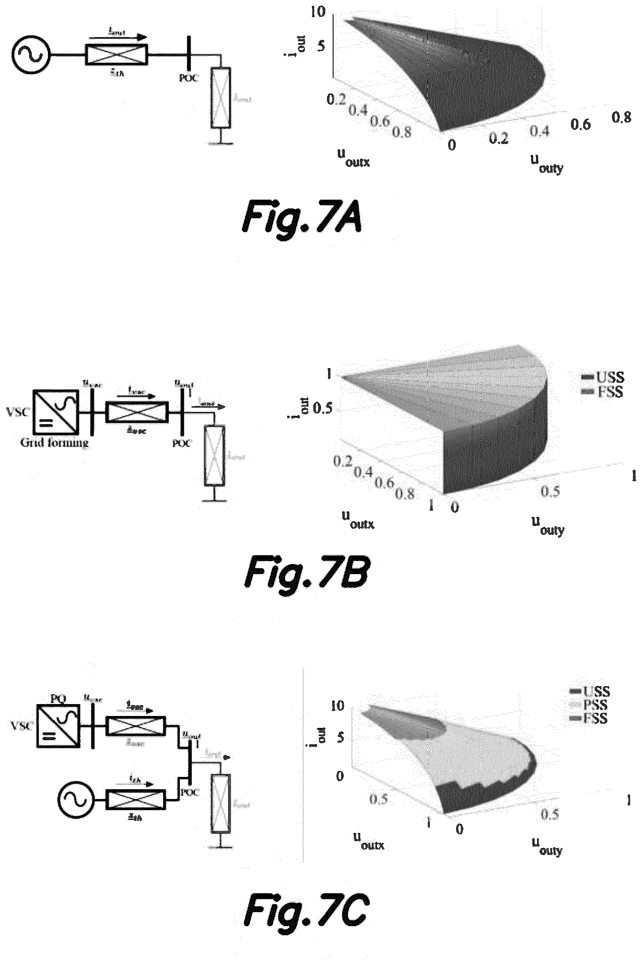

A number of *U-I* characteristic examples are analysed as presented in Figs. 7B to 7F. The obtained U-I characteristic for each example is visualized as a 3-D surface plot that represents the function $i_{out} = F(u_{outx}, u_{outy})$ and 2-D curves of $u_{out}$ and $i_{out}$ that correspond to different output impedance angles. Since the *U-I* characteristic obtained in MS and MM option may include several overlapping solution layers, the examples presented in this Section are obtained in SS option to a clear visualization of the results.

Firstly, the U-I characteristic of a conventional AC grid Thevenin equivalent is shown in example of Fig. 7B. Output current increases as the output voltage is reduced, up to a maximum current value that corresponds to the grid short circuit current, $i_{sc} = u_{th} / z_{th} = 10.19$ pu. In this case, the *U-I* characteristic function is expressed as:

$$i_{out} = (\sqrt{(u_{th} - u_{outx})^2 + u_{outy}^2})/z_{th}$$

Next, the *U-I* characteristic of a VSC operated in grid forming mode is shown in example 2. The VSC in USS regulates both the output voltage magnitude and angle at the reference values. However, the *U-I* characteristic shows a constant output voltage magnitude with varied impedance angles since the angle reference is aligned with $i_{out}$. The VSC is operated in FSS with a low output impedance, where the current injection from VSC, $i_{out}$, is saturated and output voltage magnitude is reduced instead of being regulated at the reference value. The 2D curves are overlapped as the grid-forming VSC presents the same $i_{out}$ - $u_{out}$ characteristic for different output impedance angles.

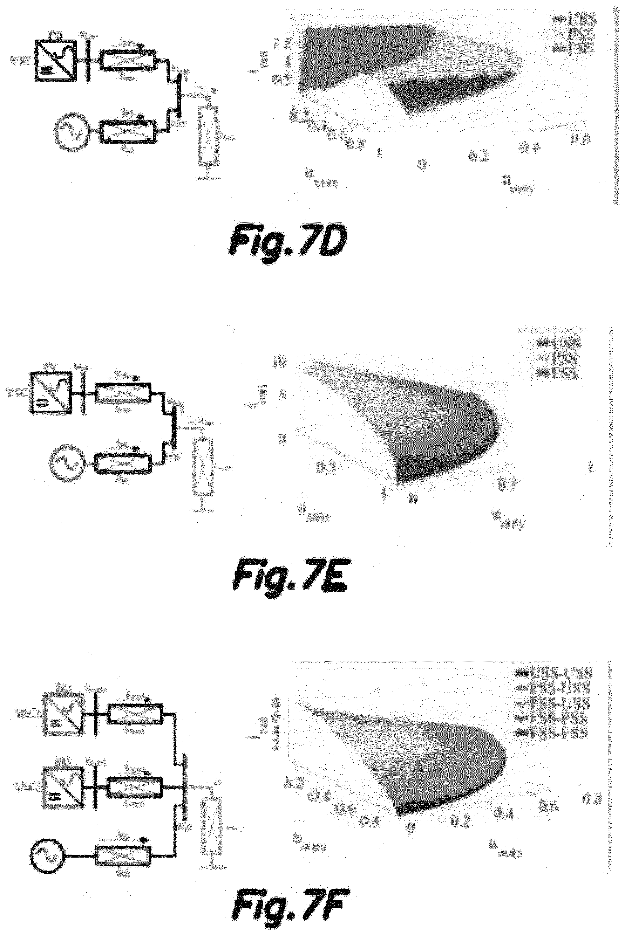

The *U-I* characteristic of an AC grid with a VSC in PQ mode is shown in Figs. 7C and 7D. The converter operation presents all the three possible current saturation states in both examples. The Thevenin equivalent impedance in the example of Fig. 7D is 10 times higher than in the example of Fig. 7D, which represents a weaker AC grid connected in parallel with the VSC. As a result, the obtained *U-I* characteristic of example 4 relies more on VSC operation compared to example 3. Then, example of Fig. 7E shows the *U-I* characteristic of an AC grid with a VSC in PV mode. The output voltage is controlled at the reference value, $u_{ref}$, for USS and PSS. However, in FSS, the output voltage is reduced. Also, in FSS, the U-I characteristic is the same as in PQ mode as shown in example of Fig. 7C, since the VSC modelling with PQ and PV mode are equivalent as expressed in (3).

Finally, an AC grid with two VSCs both operating in PQ mode is shown in example of Fig. 7F. The two VSCs have different power references. Thus, they reach PSS and FSS at different output voltage magnitudes. Current saturation states of VSC1 and VSC2 lead to 9 combinations. Usually, it is recommended to obtain the U-I characteristic of such a system with multiple power electronics elements in MS or MM option. However, SS option is selected in this example to avoid showing multiple solution layers of U-I characteristic for each combination *f*, which may not be easy to visualize in a 3D plot. Then, the following prioritizing sequence is adopted to solve the systems of equations for all combinations: USS-USS → PSS-USS → FSS-USS → USS-PSS → PSS-PSS → FSS-PSS → USS-FSS → PSS-FSS → FSS-FSS. As a result, the U-I characteristic presents solutions obtained from five combinations of VSCs current saturation states.

VII. Operation points identification

The U-I characteristic of a studied system is used as an equivalent representation to analyse the connection to an external system. The operation points at the POC are identified as intersections between the graphs of the U-I characteristic from the studied system and a function, $G_{ex}$, which defines the external system. The U-I equivalent of the studied system defines one or multiple surfaces that map any possible voltage, $(u_{outx}, u_{oity})$, to a current, $i_{out}$, with the reference angle aligned to $i_{out}$ for the convenience to develop the equivalent representation. The external system defines a curve, which ensures that the identified operation point fulfils the external system equations, following the same angular reference as the studied system. The external system may also contain power electronics elements that can operate in different current saturation states. As a result, the external system is expressed in a piece-wise format as follows:

$$G_{ex} = \begin{cases} g_{ex}^1(u_{outx}, u_{outy}) & \text{if } (\text{u}_{outx}, \text{u}_{outy}) \in \text{range}_1 \\ \quad\quad\quad \vdots \\ g_{ex}^D(u_{outx}, u_{outy}) & \text{if } (\text{u}_{outx}, \text{u}_{outy}) \in \text{range}_D \end{cases} \quad (12)$$

where $g_{ex}^d(u_{outx}, u_{outy})$ with $d \in [1,D]$ is a function corresponding to a combination of power electronics operation modes in the external system, $\text{range}_d$ defines the limits for in terms of $g_{ex}^d(u_{outx}, u_{outy})$ and $D$ is the number of all possible combinations. If the external system does not contain any power electronics element, $G_{ex}$ is defined with a single function $g_{ex}^1(u_{outx}, u_{outy})$.

A methodology for operation points identification is shown in Algorithm 3. Array of the equivalent U-I characteristic of the studied system, $C_{eq}$, and the function of the external system, $i_{out} = G_{ex}(u_{outx}, u_{outy})$, are the required input information of the algorithm. A variable *x* can be defined based on an additional constraint between $u_{outx}$ and $u_{outy}$ such that:

$$\begin{cases} u_{outx} = a_x(x) \\ u_{outy} = a_y(x) \end{cases} \quad (13)$$

This constraints in (13) are also input of Algorithm 3. Then, an external system function, $G_{ex}(u_{outx}, u_{outy})$, can be reformulated as a one variable function, $G_{ex2}(x)$, as follows:

$$i_{out} = G_{ex}(a_x(x), a_y(x)) = G_{ex2}(x) \quad (14)$$

This one variable function, $G_{ex2}(x)$, also has a piece-wise format as follows:

$$G_{ex2} = \begin{cases} g^1_{ex2}(x) & \text{if } x \in \text{range}_1 \\ \quad \vdots \\ g^D_{ex2}(x) & \text{if } x \in \text{range}_D \end{cases} \quad (15)$$

---

**Algorithm 3:** Identification of operation points

**input** : $C_{eq}(M \times N \times N_s)$, external system function $G_{ex}(u_{outx}, u_{outy})$, additional constraints $a_x(x)$ and $a_y(x)$

**output:** Identified operation points $OP$

**begin**

  a=1; $G_{ex2}(x) = G_{ex}(a_x(x), a_y(x))$;

  **for** $n_s \leftarrow 1$ **to** $N_s$ **do**

    $F_{eq}(u_{outx}, u_{outy}) = scatteredInt[C_{eq}(all, all, n_s)]$;

    $F_{eq2}(x) = F_{eq}(a_x(x), a_y(x))$;

    **for** $d \leftarrow 1$ **to** $D$ **do**

      $x_{int} = solveall(F_{eq2}(x) - g^d_{ex2}(x) = 0)$;

      $u^{int}_{outx} = a_x(x_{int})$; $u^{int}_{outy} = a_y(x_{int})$;

      $i^{int}_{out} = F_{eq2}(x_{int})$;

      $C_{int} = (u^{int}_{outx}, u^{int}_{outy}, i^{int}_{out})$; $N_i = size(C_{int})$;

      **for** $n_i \leftarrow 1$ **to** $N_i$ **do**

        **if** $EQL(C_{int}(n_i)) \& EXL(C_{int}(n_i))$

        **then** $OP(a) = C_{int}(n_i)$; $a = a + 1$; **endif**;

      **end**

    **end**

  **end**

  **return** $OP$;

**end**

---

The *U-I* characteristic of the analysed $n_s \in [1, N_s]$, system is approximated with a linearized function, $i_{out} = F_{eq}(u_{outx}, u_{outy})$. This function is obtained from a scattered data interpolation of $C_{eq}$ using the Delaunay triangulation algorithm [15]. In case of MS or MM option, each subset of U-I characteristic array, $C_{eq}(all, all, n_s)$ , which corresponds to a solution matrix $n_s$ for $n_s \in [1, N_s]$ will be linearized. In this embodiment the scattered Interpolant function in MATLAB is employed to obtain $F_{eq}(u_{outx}, u_{outy})$. This function can be also reformulated as a one-variable function, $F_{eq2}$ (x), employing the voltages components constraints expressed in (13) such that:

$$i_{out} = F_{eq}(a_x(x), a_y(x)) = F_{eq2}(x) \quad (16)$$

Then, operation points can be identified by calculating intersections between graphs of each linearized U-I characteristic function, $F_{eq2}$ (x), and each subset of the external system function, $g_{ex2}^d(x)$. All possible intersections are identified by solving the equation $F_{eq2}(x) - g_{ex2}^d(x) = 0$ iteratively with several initial states. Each obtained root of the equation represents an intersection point as function of the value $x_{int}$ such that the corresponding output voltage and current can be calculated as follows:

$$\begin{cases} u_{outx}^{int} = a_x(x_{int}); u_{outy}^{int} = a_y(x_{int}) \\ i_{out}^{int} = F_{eq2}(x_{int}) = G_{ex2}(x_{int}) \end{cases} \quad (17)$$

In addition, the operation points must be within the limits defined for the studied system U-I characteristic and the external system function. Therefore, only intersections that fulfil the range of both $F_{eq}(u_{outx},u_{outy})$ and $G_{ex}(u_{outx},u_{outy})$ are identified as operation points. The range of $G_{ex}(u_{outx},u_{outy})$ is based on the operation limits of the elements defined in (12), while the range of $F_{eq}(u_{outx},u_{outy})$ is mainly based on the voltage and current operation of the studied system, which can be defined as:

$$0 \le u_{outx}^{int} \le u_{outx}^{\max}; 0 \le u_{outy}^{int} \le u_{outy}^{\max}; 0 \le i_{out}^{int} \quad (18)$$

where $u_{outx}^{\max}$ and $u_{outy}^{\max}$ are the maximum value of voltages among all elements in $C_{eq}(all,all,n_s)$. Then, functions *EQL* and *EXL* can be defined similar to *VOL* as expressed in (10) to validate an identified intersection as an operation point that satisfies the limits of the studied system U-I characteristic and the external system function. The studied system of the embodiment System is firstly connected to a VSC in PQ mode absorbing power from the studied system with the scheme shown in Fig. 5. The external system is defined by a one-variable function, $G_{ex2}(u_{outx})$, which contains three subsets respectively corresponding to the three current saturation states of the VSC in external system:

$$\begin{cases} g_{ex2}^1 := i_{out} = \dfrac{p_{ref2} + jq_{ref2}}{u_{outx}(1 + j\tan\theta_u)} & \text{if } u_{outx} \ge \dfrac{p_{ref2}}{i_{vsc2}^{\max}} \\[3mm] g_{ex2}^2 := i_{out} = i_{vsc2}^{\max} & \text{if } u_{outx} < \dfrac{p_{ref2}}{i_{vsc2}^{\max}} \\[3mm] g_{ex2}^3 := i_{out} = i_{vsc2}^{\max} & \text{if } u_{outy} < \dfrac{q_{ref2}}{i_{vsc2}^{\max}} \end{cases} \quad (19)$$

where $p_{ref2}$ is the active power reference of the VSC in external system, $q_{ref2}$ is the reactive power reference and $i_{vsc2}^{\max}$ is the nominal current magnitude.

Fig. 5

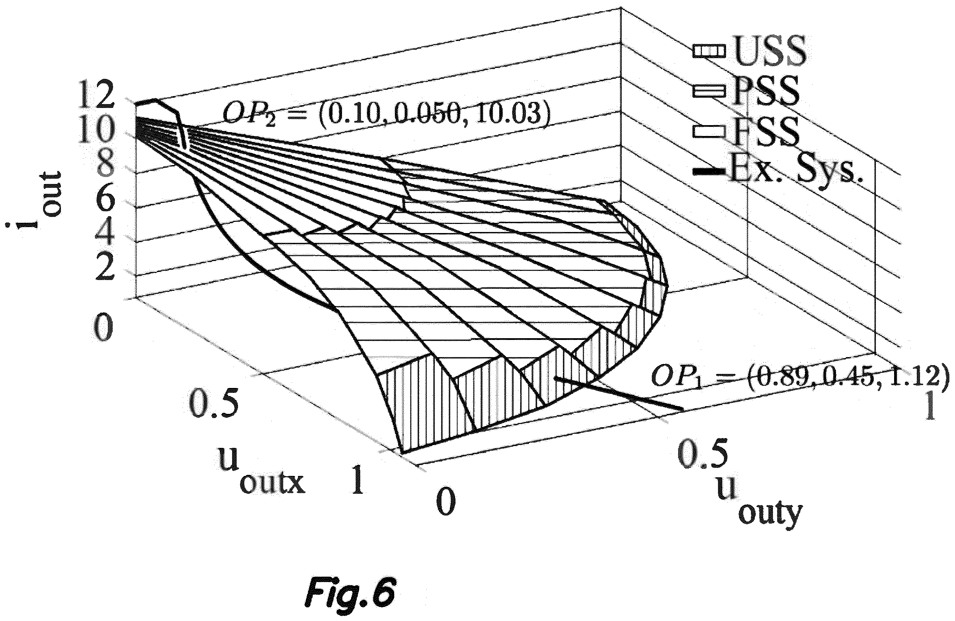

++Output impedances and have been tested for angles varied from 0° to 90° and magnitudes within the range of [0.001,0.1] pu. The admittance element, $y_{11}$, in (6) will be updated accordingly to include the inserted output impedance at bus 1 such that $y_{11}^{new} = 1/z_{out}$. The U-I characteristic involves the solution of (6) in SS option if the analysis is for normal operation as shown in Fig. 5(a). The obtained U-I characteristic of the studied system and the identified operation points coordinates, $(u_{outx},u_{outy},i_{out})$, are shown in Fig. 6.

In this case, two operation points are identified for the connection of the analysed system and external system of the VSC. It is observed that $OP_1$ has the voltage magnitude close to 1 pu, while $OP_2$ corresponds to an output voltage close to 0. Since the system under analysis is supposed to operate close to nominal voltage condition, OP1 would be selected for normal operation [16].

Then, the external system is modelled as a short-circuit impedance, $\underline{z}_{sc}$ = 0.005+0.01$j$ pu, to carry out a short-circuit calculation at the POC of the power system with the scheme shown in Fig. 5(b). The external system equation models the short-circuit impedance, $\underline{z}_{sc} = z_{sc} < \theta_{sc}$, and can be presented as a one-variable function as follows:

$$G_{ex2}(u_{outx}):=i_{out} = u_{outx} / (z_{sc} \cos\theta_{sc}) \quad (20)$$

All possible solutions are required for this short-circuit calculation. Thus, the U-I characteristic of the studied system is obtained in MM option by testing the same output impedances as in Fig. 6. As a result, six solutions are obtained with each inserted $\underline{z}_{out}$, two for each VSC current saturation states, which are tagged with the corresponding VSC current saturation states and a number. The solution matrix USS-2 is not shown since it violates the VSC operation limits for all inserted $\underline{z}_{out}$. Thus, only five subsets of U-I characteristic are employed for short-circuit calculation as shown in Fig. 7. Three operation points are identified for VSC operated in PSS and FSS. In particular, the two operation points for VSC in FSS, OP2 and OP3, lead to lower short-circuit current, $i_{out}$, compared to OP1 for PSS.

References

[11] T. García-Sánchez et al., "A review and discussion of the grid-code requirements for renewable energy sources in Spain," Renewable Energy and Power Quality Journal, vol. 1, no. 12, pp. 565-570, 2014.

[12] H. D. Chiang et al., "On the Existence and Uniqueness of Load Flow Solution for Radial Distribution Power Networks," IEEE trans. On Circuits and Systems, vol. 37, no. 3, pp. 410-416, 1990.

[13] D. Mehta et al., "Numerical polynomial homotopy continuation method to locate all the power flow solutions," IET Generation, Transmission and Distribution, vol. 10, pp. 2972-2980, sep 2016.

[14] J. Verschelde, "Algorithm 795: PHCpack: A general-purpose solver for polynomial systems by homotopy continuation," ACM trans. On Mathematical Software, vol. 25, no. 2, pp. 251-276, 1999.

[15] I. Amidror, "Scattered data interpolation methods for electronic imaging systems: a survey," Journal of Elect. Imaging, vol. 11, p. 157, apr 2002.

[16] D. Mehta et al., "Recent advances in computational methods for the power flow equations," Proceedings of the American Control Conference, vol. 2016-July, pp. 1753-1765, 2016.

**Claims**

1. A method for obtaining voltage-current characteristics of a power system with power electronic converters, including at least one electronic power converter the system being represented by an equivalent model, including a Voltage Source Converter, VSC, in series connection with phase reactors, connected to a point of connection, POC, of an electrical network external to the power system, the method comprising following steps:

(A) loading, by a processor unit, a system of equations $SE_f$ that define the VSC operation of the power electronic system according to a selected combination of saturation states of the power electronic converters of the power system in which the involved power converters can operate, including an admittance matrix Y relating to the current and voltages of the power system and a current injection constraint H for each selected combination;
(B) calculating, by a processor unit, by running an iterative algorithm, from a given equivalent model of the power system, a solution of the system of equations $SE_f$ for each of a plurality of test impedances, including for each impedance a module and an angle; and
(C) applying, by a processor unit, to each calculation at least one of:

- a Single-State-Single-Solution, SS,
- a Multiple-States-Single-Solution, MS,
- a Multiple-States-Multiple-Solutions, MM,

wherein the iterative algorithm performing the calculation of the system of equations $SE_f$ for each test impedance obtaining one or more solutions of the system of equations $SE_f$ at least for some of the test impedances, each solution including a set of values of current and voltage defining a U-I characteristics, or a I-U characteristics, of the power system.

2. The method according to claim 1, wherein said set of values of current and voltage is a set of three values, wherein a first part of the U-I characteristics or I-U characteristics is a real number, and a second part comprises a real part and an imaginary part.

3. The method according to claim 2, further comprising a step of representing for each solution of the system of equations $SE_f$ in a three-dimensional space, a 3D surface $C_{eq}$, defined by the set of three values for each test impedance.

4. The method according to claim 1, wherein the VSC operation of the power system includes VSC operation control modes PQ and PV, which are divided in three current saturation states: unsaturated state, USS, partially saturated state, PSS, and fully saturated state, FSS, and VSC operation control mode GF, which is divided in two current saturation states, USS and FSS.

5. The method according to claim 3, wherein the power system includes at least two power converters, and wherein said step of representing provides a 3D surface of the VSC operation of the power system for two converters considering the following saturation states combination: USS-USS, USS-PSS, USS-FSS, PSS-USS, PSS-PSS, PSS-FSS, and FSS-USS, FSS-PSS, FSS-FSS.

6. The method according to claim 1, wherein the equivalent model of the power system includes the solutions of said system of equations $SE_f$, including U-I characteristics or I-U characteristics associated to a current source or a voltage source.

7. The method according to any one of the previous claims, wherein the U-I characteristics or I-U characteristics of the power system are operated in conjunction with an external system by finding a graphical intersection between the at least one 3D surface $C_{eq}$ describing the power system and a function $G_{ex}$ describing the external system.

8. The method according to claim 7, wherein the external system $G_{ex}$ includes power elements that operates in different current saturation states that are calculated through a combination of saturation states.

9. The method according to claim 1, wherein the power system further includes at least one voltage source with a series impedance, or at least one current source with a parallel impedance connected to the point of connection, POC, of an electrical network external to the power system.

10. The method according to any one of the previous claims, wherein the iterative algorithm of step (B) an admittance matrix Y, some constraints H, options regarding the number of possible solutions and values of impedances: magnitudes $z_{out}$ and angles $\theta_z$ and provides as a result a 3D surface $C_{eq}$ representative of the power system.

11. The method according to claim 10, wherein the iterative algorithm of step (B) uses an auxiliary algorithm operated by a processor unit that calculates solutions (voltage, current) of the power system for a specific option about the number of solutions.

12. The method according to claim 7, wherein the processor unit runs a third algorithm that receives as inputs the $C_{eq}$ (set of solutions S), $G_{ex}$ representing the external system and additional constraints between variables a(x). This third algorithm calculates operation point of the power system represented with equivalent U-I characteristics when connected to an external system at a specific bus. The calculation is performed by the processor unit as geometric intersection between the representation of the power system and the external system.

Fig.1 Prior Art

Fig.2

Fig.3

**Fig.4**

**Fig.5**

**Fig.6**

**Fig.7A**

**Fig.7B**

**Fig.7C**

**Fig.7D**

**Fig.7E**

**Fig.7F**

(a) USS-1        (b) PSS-1        (c) PSS-2

(d) FSS-1        (e) FSS-2

*Fig.8*

EP 4 030 578 A1

(a) USS-USS    (b) USS-PSS    (c) USS-FSS

(d) PSS-USS    (e) PSS-PSS    (f) PSS-FSS

(g) FSS-USS    (h) FSS-PSS    (i) FSS-FSS

*Fig.9*

EP 4 030 578 A1

*Fig.10*

EP 4 030 578 A1

Europäisches
Patentamt

European
Patent Office

Office européen
des brevets

## EUROPEAN SEARCH REPORT

Application Number

EP 21 38 2028

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GOMIS-BELLMUNT O ET AL: "Voltage-current characteristics of multiterminal HVDC-VSC for offshore wind farms", ELECTRIC POWER SYSTEMS RESEARCH, ELSEVIER, AMSTERDAM, NL, vol. 81, no. 2, 1 February 2011 (2011-02-01), pages 440-450, XP027572791, ISSN: 0378-7796 [retrieved on 2010-12-23] | 1-6,9-11 | INV. H02J3/46 |
| A | * Sections 4 and 5 * ----- | 7,8,12 | |

TECHNICAL FIELDS
SEARCHED      (IPC)

H02J

The present search report has been drawn up for all claims

| Place of search | Date of completion of the search | Examiner |
|---|---|---|
| Munich | 14 July 2021 | Chabas, Julien |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 108832606 A1
- EP 0893002 A1

### Non-patent literature cited in the description

- **H. HELMHOLTZ.** Ueber einige Gesetze der Vertheilung elektrischer Ströme in körperlichen Leitern mit Anwendung auf die thierischelektrischen Versuche. *Annalen der Physik und Chemie,* vol. 165, 211-233
- **L. C. THEVENIN.** Extension de la loi d'Ohm aux circuits électromoteurs complexes. *Annales Télégraphiques,* vol. 10, 222-224
- **Z. SHUAI ; D. HE ; Z. XIONG ; Z. LEI ; Z. JOHN SHEN.** Comparative Study of Short-Circuit Fault Characteristics for VSC-Based DC Distribution Networks with Different Distributed Generators. *IEEE Journal of Emerging and Selected Topics in Power Electronics,* 2019, vol. 7 (1), 528-540
- **Z. H. RATHER et al.** Dynamic Reactive Power Compensation of Large-Scale Wind Integrated Power System. *IEEE Trans. on Power Systems,* September 2015, vol. 30, 2516-2526
- Short-circuit field tests of Shandong Rongcheng wind farms and measured data analysis. **CHUNYI WANG et al.** 2015 12th Int. Conf. on Fuzzy Systems and Knowledge Discovery (FSKD). IEEE, August 2015, 2670-2675
- **J. BEERTEN et al.** Generalized Steady-State VSC MTDC Model for Sequential AC/DC Power Flow Algorithms. *IEEE Trans. on Power Systems,* May 2012, vol. 27, 821-829
- **J. CAO et al.** Minimization of transmission loss in meshed AC/DC grids with VSC-MTDC networks. *IEEE Trans. on Power Systems,* 2013, vol. 28 (3), 3047-3055
- **M. ARAGÜÉS-PENALBA et al.** Optimal power flow tool for mixed high-voltage alternating current and high-voltage direct current systems for grid integration of large wind power plants. *IET Renewable Power Generation,* November 2015, vol. 9, 876-881
- **H. ERGUN et al.** Optimal Power Flow for AC-DC Grids: Formulation, Convex Relaxation, Linear Approximation, and Implementation. *IEEE trans. on Power Systems,* July 2019, vol. 34, 2980-2990
- **T. GARCÍA-SÁNCHEZ et al.** A review and discussion of the grid-code requirements for renewable energy sources in Spain. *Renewable Energy and Power Quality Journal,* 2014, vol. 1 (12), 565-570
- **H. D. CHIANG et al.** On the Existence and Uniqueness of Load Flow Solution for Radial Distribution Power Networks. *IEEE trans. On Circuits and Systems,* 1990, vol. 37 (3), 410-416
- **D. MEHTA et al.** Numerical polynomial homotopy continuation method to locate all the power flow solutions. *IET Generation, Transmission and Distribution,* September 2016, vol. 10, 2972-2980
- **J. VERSCHELDE.** Algorithm 795: PHCpack: A general-purpose solver for polynomial systems by homotopy continuation. *ACM trans. On Mathematical Software,* 1999, vol. 25 (2), 251-276
- **I. AMIDROR.** Scattered data interpolation methods for electronic imaging systems: a survey. *Journal of Elect. Imaging,* April 2002, vol. 11, 157
- **D. MEHTA et al.** Recent advances in computational methods for the power flow equations. *Proceedings of the American Control Conference,* July 2016, 1753-1765